# EUROPÄISCHE PATENTSCHRIFT

(11) **EP 1 106 543 B1**
(45) Veröffentlichungstag und Bekanntmachung des Hinweises auf die Patenterteilung: **12.05.2004**
(21) Anmeldenummer: 00122122.5
(22) Anmeldetag: 12.10.2000
(51) Int. Cl.: B65G 39/02, F16C 13/00

(54) **Rolle, insbesondere Kunststoffrolle**
Roller, especially plastic roller
Rouleau, notamment rouleau en matière plastique

(30) Priorität: 02.12.1999 DE 29921170 U
(43) Veröffentlichungstag der Anmeldung: 13.06.2001
(73) Patentinhaber: Fritz Schäfer Gesellschaft mit beschränkter Haftung, D-57290 Neunkirchen (DE)
(72) Erfinder: Schäfer, Gerhard, 57290 Neunkirchen (DE)
(74) Vertreter: Valentin, Ekkehard, Dipl.-Ing.

(56) Entgegenhaltungen:
- EP-A- 0 136 867
- EP-A- 0 858 962
- GB-A- 805 010
- GB-A- 1 405 679
- US-A- 3 522 643
- US-A- 4 312 444

## Beschreibung

Die Erfindung betrifft eine Rolle, insbesondere aus Kunststoff, die eine metallische Achse aufweist, deren Achsenden in Rollenbahnleisten lagert.

Eine Rollgangs-Rolle, die über die zwischen ihren Achsenden aus Stahl verbleibende Länge mit einer mehrschichtigen Ummantelung aus einem thermoplastischen Kunststoff versehen ist, ist durch die EP 0 858 962 A 2 bekanntgeworden. Die oben genannten Rollenleisten bzw. Rollenbahnleisten kommen üblicherweise in Durchlaufregalen für mit Waren beladene Behälter, z.B. Lager- und/oder Transportkästen oder Kartons, zum Einsatz. Das Regal besitzt üblich in mehreren Etagen übereinander sowie in jeder Etage zu mehreren nebeneinander angeordnete, geneigte Laufbahnen für die Behälter. Jede Laufbahn besteht aus Rollenbahnleisten, die im Abstand und in einer Reihe hintereinander frei drehbare Röllchen bzw. Rollen besitzen, die meist als Zylinderrolle oder als Spurkranzrolle ausgebildet sind und üblich in einem meist verzinkten Stahlblechprofil lagern. Die Rollen (aus Stahl, vorzugsweise aus Kunststoff), sind den jeweiligen Belastungsfällen angepaßt und dienen als Stütz- und Führungselemente für die Behälter bzw. Kästen.

Um den auftretenden Belastungsfällen entsprechen zu können, sind Rollen aus Kunststoff mit durchgeführter Stahlachse, Vollkunststoff-Rollen sowie bei sehr hohen Belastungen Stahlrollen bekannt. Hierbei hat sich gezeigt, daß sowohl die Rollen mit Stahlachsen als auch die Vollkunststoffrollen Nachteile mit sich bringen. Bei Bestückung der Rollenbahnleisten mit Stahlachsen besitzenden Rollen tritt durch die größeren Berührungsflächen ein undefinierter Lauf auf, da unter Umständen einerseits die Rolle um die Stahlachse rotiert und andererseits die Stahlachse im Achslager. Diese Nachteile werden zwar mit Vollkunststoffrollen vermieden, jedoch erlauben diese keine hohen Belastungen. Außerdem wirken alle negativen Einflüsse (Temperatur, Kriechverhalten, Versprödung, etc.) auf die Kunststoffteile ein und reduzieren auch auf diese Weise die Belastungseigenschaften der Achse.

Der Erfindung liegt daher die Aufgabe zugrunde, eine Rolle der eingangs genannten Art zu schaffen, die hohen Belastungen standhält, ohne das Laufverhalten einzuschränken.

Diese Aufgabe wird erfindungsgemäß dadurch gelöst, daß auch die Achsenden von einem Kunststoffmantel umschlossen sind. Es läßt sich damit eine an die hohen Belastungen angepaßte, stabile Achse, vorzugsweise eine in den Kunststoffmantel integrierte Stahlachse, einsetzen. Durch die eingelagerte Stahlachse können hohe Belastungen auf die Rollen übertragen werden, wobei aber durch die Ummantelung auch der Achsenden mit Kunststoff ein geringerer Rollwiderstand im Achslager und somit ein besseres Anlaufverhalten der Kästen, Tablare oder dergleichen erreicht wird.

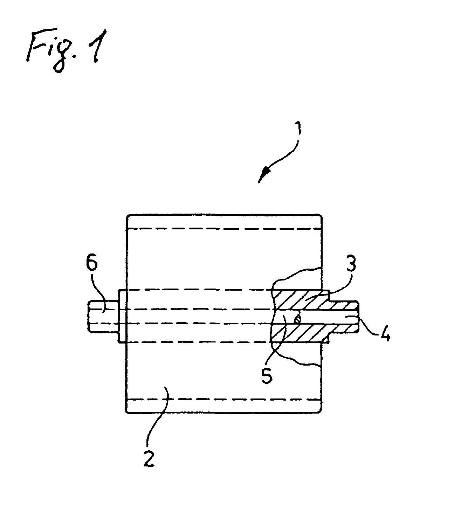

Die Integration der Stahlachse kann bei einer Kunststoffrolle zugleich bei deren Herstellung erfolgen, nämlich durch Einlegen in ein Spritzgießwerkzeug und damit gleichzeitiges Umspritzen; alternativ läßt sich auch eine nachträgliche, automatisierte Montage durchführen, indem die Stahlachse in die mit dem Kunststoffmantel vorgefertigte Rolle eingepreßt wird. Es läßt sich dabei gleichzeitig eine Kompatibilität an die gegenüber Rollen mit Stahlachsen im Durchmesser größeren Achslager für die Achsenden von Vollkunststoffrollen erreichen. Wenn nämlich eine herkömmliche Stahlachse in den an die Abmessungen des Achslagers angepaßten Kunststoffmantel angeordnet wird, lassen sich in einfacher Weise nachträglich Weitere Merkmale und Vorteile der Erfindung ergeben sich aus den Ansprüchen und der nachfolgenden Beschreibung eines in der einzigen Zeichnung dargestellten Ausführungsbeispiels der Erfindung.

Eine Rolle 1 mit einem Rollkörper 2 aus Kunststoff weist als Bestandteil einen als Kunststoffmantel 3 ausgebildeten Kern auf, der beidendig aus dem Rollkörper 2 hervorragt. Der Kunststoffmantel 3 ist mit einer Durchgangsbohrung 4 ausgebildet, die eine eingepreßte oder sogleich bei der Herstellung des Vollkörpers 2 im Spritzgußwerkzeug umspritzte Stahlachse 5 aufnimmt. Die Gesamtlänge der Stahlachse 5 entspricht der des Kunststoffmantels 3, so daß die Achsenden 6 ebenfalls von dem Kunststoffmantel 3 umschlossen sind. Es liegt damit eine eingelagerte bzw. integrierte Stahlachse 5 vor, die es erlaubt, hohe Belastungen auf die Rolle 1 zu übertragen, gleichwohl aber einen geringen Rollwiderstand aufweist und damit das Anlaufverhalten der auf die mit solchen Rollen 1 bestückten Rollenbahnleisten aufgesetzten Behältnisse verbessert.

## Patentansprüche

1. Rolle (1), insbesondere aus Kunststoff, die eine metallische Achse (5) aufweist, deren Achsenden (6) in Rollenbahnleisten lagern,
**dadurch gekennzeichnet,**
**daß** auch die Achsenden (6) von einem Kunststoffmantel (3) umschlossen sind.

2. Rolle nach Anspruch 1
**gekennzeichnet durch**
eine in den Kunststoffmantel (3) integrierte Stahlachse (5).

## Claims

1. A roller (1), in particular made of plastic, which has a metal axle (5) whose axle ends (6) are mounted in roller conveyor strips,
**characterised in that**
the axle ends (6) are also enclosed by a plastic casing (3).

2. The roller according to claim 1,
**characterised by**
a steel axle (5) integrated into the plastic casing (3).

## Revendications

1. Rouleau (1), notamment en matière plastique, qui comporte un axe métallique (5) dont les extrémités (6) sont logées dans des barres de transporteur à rouleaux,
**caractérisé en ce que** les extrémités d'axe (6) sont aussi entourées d'un manchon en matière plastique (3).

2. Rouleau selon la revendication 1, **caractérisé par** un axe en acier (5) intégré dans le manchon en matière plastique (3).
